# FASCICULE DE BREVET EUROPEEN

(11) **EP 2 864 186 B1**
(45) Date de publication et mention de la délivrance du brevet: **16.11.2016**
(21) Numéro de dépôt: 13727251.4
(22) Date de dépôt: 03.05.2013
(51) Int. Cl.: B62D 25/12, E05F 5/02, E05F 5/06

(54) **SYSTEME DE MONTAGE D'UNE PORTE DE COFFRE SUR UN VEHICULE COMPRENANT UNE BUTÉE SOUPLE ADAPTÉE**
SYSTEM ZUR MONTAGE EINES KOFFERRAUMDECKELS AN EINEM FAHRZEUG MIT EINEM GEEIGNETEN FLEXIBLEN ANSCHLAG
SYSTEM FOR FITTING A BOOT LID TO A VEHICLE COMPRISING A SUITABLE FLEXIBLE STOP

(30) Priorité: 21.06.2012 FR 1255848
(43) Date de publication de la demande: 29.04.2015
(73) Titulaire: Renault S.A.S., 92100 Boulogne-Billancourt (FR)
(72) Inventeur: PERIANU, Viorel, Bucuresti (RO)
(86) Numéro de dépôt international: PCT/FR2013/050992
(87) Numéro de publication internationale: WO 2013/190194

(56) Documents cités:
- EP-A2- 2 258 915
- WO-A1-2004/038148
- DE-A1- 1 430 263
- DE-A1- 3 336 565
- DE-A1- 4 319 136
- US-A1- 2008 018 131

## Description

L'invention se rapporte à un système de montage d'une porte de coffre sur un véhicule. Généralement, un véhicule automobile est doté d'un coffre de rangement à sa partie arrière, l'ouverture et la fermeture de ce coffre étant réalisées au moyen d'une porte mobile en rotation, montée sur ledit véhicule. Cette porte comprend un panneau plan principal, apte à pivoter entre une position de fermeture sensiblement horizontale, et une position d'ouverture maximale inclinée, se rapprochant de la position verticale. La rotation de la porte est assurée par deux bras latéraux parallèles en forme de col de cygne, chacun desdits bras s'inscrivant dans un plan vertical et longitudinal du véhicule. Chaque bras possède une première extrémité fixée rigidement au panneau de la porte, et une deuxième extrémité qui est montée pivotante sur un élément de carrosserie situé à l'intérieur du coffre. Chaque bras est également prolongé par un levier, et un ressort à spirales précontraint relie ledit levier à un élément de carrosserie fixe situé à l'intérieur du coffre. Les bras, les leviers et les ressorts sont configurés et agencés au niveau de la partie arrière du véhicule, de manière à favoriser l'ouverture de la porte, une fois que celle-ci a été déverrouillée de sa position de fermeture, pour être ouverte. En effet, en se contractant pour retrouver leur forme naturelle, chaque ressort exerce un effort de traction sur chaque bras via le levier, pour faciliter le pivotement de la porte vers sa position d'ouverture maximale. Ainsi, les ressorts permettent de minimiser les efforts qu'un individu aura à fournir pour ouvrir la porte, et garantissent également le maintien de ladite porte dans sa position d'ouverture maximale, afin qu'elle ne retombe pas accidentellement.

Dans un souci de confort et de sécurité, il est important que la porte soit amortie lorsqu'elle atteint sa position d'ouverture maximale. Cette phase d'amortissement mécanique en bout de course est souvent assurée par une butée déformable, placée sur chaque bras. Ainsi, lorsque la porte est sur le point d'atteindre sa position de complète ouverture, les butées déformables viennent s'écraser sous deux bordures latérales du coffre, afin d'amortir la fin de course de ladite porte.

Un exemple de butée correspondant au préambule de la revendication 1 est montré par le document EP 2258915 A2.

Or, un problème couramment rencontré avec de telles butées d'amortissement, est le phénomène de rebonds. En effet, en raison notamment de la présence des ressorts, la porte du coffre s'ouvre facilement, en acquérant une certaine vitesse, et, une fois arrivée en bout de course, ladite porte est soumise à des rebonds, avant de se stabiliser. Ces battements répétés et mal maitrisés de la porte, peuvent occasionner des désagréments de confort, et engendrer des blessures sur des personnes présentes autour du coffre.

Les systèmes de montage d'une porte de coffre doivent donc être conçus, non seulement pour amortir la porte lorsqu'elle atteint une position de pleine ouverture, mais également pour empêcher tout phénomène de rebonds. Il en résulte un mécanisme d'ouverture de la porte de coffre, qui est plus fluide et plus sécuritaire. Une butée déformable selon l'invention est particulièrement adaptée à de tels systèmes de montage.

L'invention a pour objet une butée pour système de montage d'une porte de coffre sur un véhicule selon la revendication 1. La principale caractéristique d'une butée pour système de montage d'une porte de coffre sur un véhicule selon l'invention, est qu'elle comprend une excroissance interne et une cavité creuse, ladite excroissance étant conçue pour venir s'insérer à l'intérieur de ladite cavité en générant des frottements, lorsque la butée se déforme. Ainsi, lorsque la porte du coffre est sur le point d'atteindre une position de pleine ouverture, chaque butée commence à se déformer en provoquant une interaction de type mâle/femelle entre l'excroissance et la cavité, pour permettre un amortissement progressif et unilatéral de la porte, jusqu'à une stabilisation finale, sans possibilité de rebonds. L'interaction entre l'excroissance et la cavité s'effectue donc avec une certaine force, pour éviter à l'excroissance de ressortir facilement et de façon naturelle, de ladite cavité dans laquelle elle est insérée. De cette manière, chaque butée ne se déforme qu'une seule fois et de façon progressive, lorsque la porte du coffre atteint sa position d'ouverture maximale, et se retrouve figée dans sa position déformée. Il en résulte que la porte ne subit aucun rebond intempestif avant de se stabiliser dans sa position d'ouverture maximale, et qu'elle se retrouve maintenue dans cette position. Cette interaction entre l'excroissance et la cavité peut s'effectuer avec ou sans déformation de ladite excroissance et/ou de ladite cavité, l'essentiel étant qu'il y ait un contact étroit entre ces deux éléments. Chaque bordure latérale saille latéralement dans le coffre, et délimite généralement une gouttière sensiblement horizontale pour évacuer de l'eau. Chaque bras peut également être associé à un ressort précontraint fixé à une paroi délimitant le coffre, de manière à faciliter le mouvement d'ouverture de la porte, sous l'effet du ressort qui se contracte pour tenter de retrouver sa forme naturelle.

De façon préférentielle, chaque butée possède un plot dotée d'une tête élargie, et est fixée à un bras au moyen d'une insertion de ladite tête dans ledit bras. En supposant que la butée déformable soit réalisée dans un matériau flexible ou élastique, tel que par exemple, du caoutchouc, elle peut être implantée dans chaque bras par une simple manipulation, ne nécessitant aucun outillage ni effort particulier. Une simple pression manuelle exercée sur la butée, permet de faire pénétrer la tête élargie dans chaque bras. Préférentiellement, la tête élargie est de forme tronconique, pour favoriser son insertion dans le bras et pour empêcher son retrait dudit bras.

Préférentiellement, l'excroissance est déformable élastiquement. De cette manière, ladite excroissance vient se loger dans la cavité en se déformant et en créant donc des forces de contact importantes avec la paroi de ladite cavité, pour venir amortir efficacement la porte du coffre en bout de course.

De façon avantageuse, l'excroissance comprend deux lèvres écartées et la cavité est une gorge de section transversale profilée, l'écartement desdites lèvres étant inférieur aux dimensions de l'ouverture de ladite gorge.

De cette manière, les deux lèvres vont pouvoir pénétrer facilement dans la gorge, de façon sûre et répétitive, et vont avoir tendance à se resserrer progressivement dans ladite gorge au fur et à mesure que la section de la gorge va diminuer.

Avantageusement, chaque lèvre à une section triangulaire pour faciliter la pénétration de l'excroissance dans la gorge. De cette manière, la géométrie des lèvres est adaptée au profil de la gorge pour permettre auxdites lèvres de venir s'insérer facilement dans ladite gorge, et coulisser dans celle-ci en présentant une surface de contact étendue avec celle-ci. Les forces de frottement entre les lèvres et la paroi délimitant la gorge vont ainsi se retrouver augmentées grâce à ce contact étroit et étendu entre les deux lèvres et ladite gorge.

De façon préférentielle, chaque butée est creuse et possède deux branches latérales conçues pour se fléchir vers l'extérieur de ladite butée, dans le cas d'une déformation de celle-ci. En effet, en ayant tendance à s'élargir lorsqu'elle se déforme, chaque butée offre une surface de contact étendue avec la bordure latérale du coffre contre laquelle elle vient en appui, assurant ainsi de bonnes conditions de stabilité du mécanisme d'ouverture. Chaque butée présente un espace libre entre l'excroissance et la cavité pour, d'une part, favoriser son écrasement lorsque la porte du coffre arrive en bout de course d'ouverture, et d'autre part, faciliter le déplacement de l'excroissance vers la cavité lors de sa déformation.

Préférentiellement, chaque bras est en forme de col de cygne, et s'étend dans un plan vertical et longitudinal du véhicule. Ainsi, les deux bras sont amenés à pivoter autour d'un axe transversal et sensiblement horizontal du véhicule, en demeurant chacun dans un plan sensiblement vertical et longitudinal dudit véhicule.

De façon avantageuse, un ressort précontraint relie chaque bras à une paroi interne du coffre, de façon à favoriser l'ouverture de la porte dudit coffre. En effet, chaque ressort favorise le pivotement de chacun des deux bras une fois que la porte a été déverrouillée de sa position de fermeture, pour amener sans effort particulier ladite porte dans une position de complète ouverture. De même ses ressorts contribuent à maintenir la porte grande ouverte. Les ressorts, qui ont tendance à accélérer le mouvement d'ouverture de la porte, rendent indispensables la présence de butées déformables, car les risques de rebonds sont plus importants.

Avantageusement, chaque butée déformable est réalisée en caoutchouc et a une dureté Shore inférieure à 75Sh. Préférentiellement, la dureté Shore de chaque butée est égale à 70Sh.

L'invention a pour deuxième objet une butée déformable pour la mise en oeuvre d'un système de montage selon l'invention. La principale caractéristique d'une butée déformable selon l'invention, est qu'elle présente une excroissance interne et une cavité, ladite excroissance pouvant pénétrer dans ladite cavité en générant des frottements, lorsque ladite butée se déforme sous l'effet d'une contrainte exercée suivant un axe joignant ladite excroissance et ladite cavité.

Les systèmes de montage selon l'invention présentent l'avantage de posséder une fonctionnalité supplémentaire en empêchant les rebonds de la porte de coffre en fin de course, tout en demeurant d'un encombrement constant par rapport aux systèmes de montage existants. En effet, les butées déformables selon l'invention, n'ont pas besoin d'être surdimensionnées pour assurer cette fonction, et ne nécessitent pas l'ajout de pièces supplémentaires. De plus, ils ont l'avantage d'être d'un coût constant par rapport aux systèmes de montage existants, tout en présentant un perfectionnement technique significatif.

On donne ci-après une description détaillée d'un système de montage d'une porte de coffre selon l'invention, ainsi que d'une butée déformable mise en oeuvre dans un tel système, en se référant aux figures 1 à 3b.
- La figure 1 est une vue en perspective de la partie arrière d'un véhicule illustrant une porte de coffre fixée audit véhicule au moyen d'un système de montage selon l'invention,
- La figure 2 est une vue en perspective d'une butée déformable selon l'invention,
- La figure 3a est une vue en coupe d'une butée déformable selon l'invention, montée sur un bras d'articulation d'une porte de coffre, ladite butée étant dans une configuration de repos,
- La figure 3b est une vue en coupe d'une butée déformable selon l'invention, montée sur un bras d'articulation d'une porte de coffre, ladite butée étant déformée,

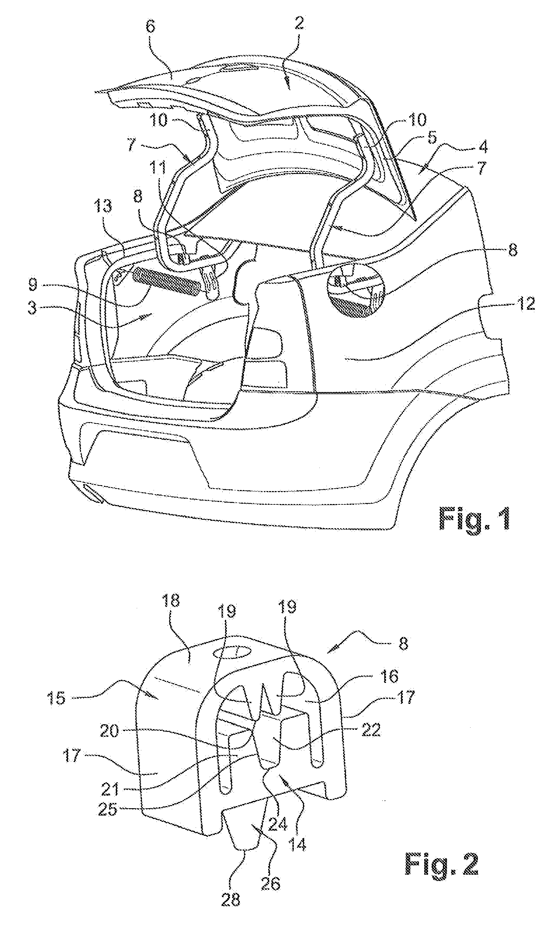

En se référant à la figure 1, un système de montage selon l'invention, permet de fixer en rotation une porte 2 de coffre 3 à l'arrière d'un véhicule 4 automobile. Cette porte 2 comprend un panneau principal 5 plan prolongé par un bord plan 6, ledit panneau 5 et ledit bord 6 faisant entre eux un angle supérieur ou égal à 90°. Le système de montage selon l'invention, comprend notamment deux bras 7 articulés, deux butées 8 déformables et deux ressorts 9 de rappel, et permet de faire pivoter la porte 2 du coffre 3 entre une position de fermeture et une position de complète ouverture. La position de fermeture de la porte 2 se traduit schématiquement par un panneau 5 principal en position horizontale et un bord 6 en position verticale. La position de complète ouverture de ladite porte, et qui est notamment illustrée à la figure 1, correspond à un panneau principal 5 fortement incliné, pouvant être vertical, et à un bord 6 sensiblement horizontal. Le panneau principal 5 possède une surface plus importante que celle du bord 6 qui le prolonge. Les deux bras 7 sont identiques et comportent un profil en col de cygne. Ils s'étendent chacun dans un plan vertical et longitudinal du véhicule, et sont dotés d'une première extrémité 10, qui est rigidement fixée au panneau principal 5 par soudage, et une deuxième extrémité, qui est montée pivotante autour d'un axe horizontal et transversal du véhicule 4. Un levier 11 rigide est solidarisé à chacun des bras 7, et un ressort 9 à spirales précontraint relie ledit levier 11 à un élément de carrosserie fixe délimitant latéralement le coffre 3. Plus précisément, un point d'ancrage du ressort 9 est réalisé sur le levier 11 et l'autre point d'ancrage s'effectue sur la surface interne d'une aile 12 du véhicule 4, dans une zone située à l'arrière du coffre 3. Ainsi, lorsqu'un individu ouvre la porte 2 du coffre 3, les ressorts 9 exercent une force de traction au niveau du levier 11 de chaque bras 7, en se contractant pour tenter de retrouver leur forme naturelle, cet effort contribuant à favoriser la rotation de chaque bras 7 pour faciliter l'ouverture de la porte 2 du coffre jusqu'à sa position de complète ouverture. Le coffre 3 est bordé latéralement par deux gouttières 13 longitudinales et horizontales, et une butée déformable 8 est solidarisée à chacun des deux bras 7 pour amortir la porte 2 du coffre 3 en fin de course, lorsque ladite porte 2 atteint une position de complète ouverture.

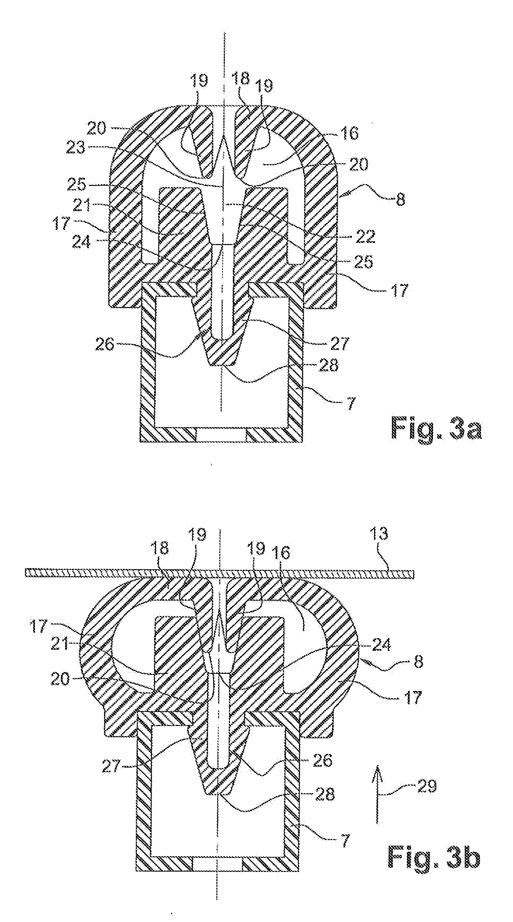

En se référant aux figures 2 et 3a, une butée déformable 8 selon l'invention, est creuse et est réalisée dans un caoutchouc ayant une dureté Shore de 70Sh. Chaque butée 8 comprend une embase inférieure 14 coiffée par une enveloppe arrondie 15, ladite embase 14 et ladite enveloppe 15 se rejoignant en ménageant entre elles un espace libre 16. Plus précisément, l'enveloppe 15 comprend deux parois latérales 17 reliées entre elles par une paroi supérieure 18 faisant face à ladite embase 14. De ladite paroi supérieure 18, saillent vers ladite embase 14, deux lèvres parallèles 19 et allongées, ayant une section transversale triangulaire, lesdites lèvres 19 s'étendant vers l'embase 14 en s'amenuisant progressivement pour se terminer par une arête 20. Autrement dit, chaque lèvre 19 s'affine au fur et à mesure qu'elle se rapproche de ladite embase 14, selon une direction perpendiculaire au plan de ladite embase 14, les parties desdites lèvres 19, les plus proches de cette embase 14 étant constituées par les deux arêtes parallèles 20. L'embase 14 présente une protubérance 21, qui saille vers les deux lèvres 19 de la paroi supérieure 18 de l'enveloppe 15, ladite protubérance 21 étant traversée par une gorge 22 s'étendant dans une direction parallèle à un axe longitudinal desdites lèvres 19. Cette gorge 22 possède une section transversale profilée, qui est élargie au niveau de son ouverture 23, et qui est réduite au niveau de son fond 24. De cette manière, la gorge 22 est bordée par deux parois latérales, planes inclinées 25. Le fond 24 de la gorge 22 est plus éloigné des deux lèvres 19, que ne l'est son ouverture 23. Autrement dit, plus on se rapproche du fond 24 de la gorge 22, plus ladite gorge 22 se resserre. Un plot 26 se terminant par une tête tronconique 27 élargie, saille de l'embase 14 vers l'extérieur de la butée 8 déformable, dans une direction opposée à celle de la protubérance 21. Ce plot 26 possède un corps cylindrique de diamètre constant, prolongée par la tête tronconique 27élargie, le diamètre de ladite tête 27 étant supérieur à celui du corps au niveau de leur interface de contact, et diminuant progressivement en s'éloignant dudit corps. De cette manière, le plot 26 présente un épaulement séparant le corps et la tête 27, et se termine par une extrémité circulaire plane 28 de diamètre inférieur à celui dudit corps.

En se référant à la figure 3a, un bras 7 d'articulation est tubulaire, et une butée déformable 8 est implantée dans chaque bras 7, en insérant à force, la tête tronconique élargie 27 du plot 26 dans un orifice de chaque bras 7, jusqu'à ce que l'épaulement se retrouve à l'intérieur dudit bras 7. Cette implantation est réalisée manuellement en provoquant la déformation de la tête élargie 27 du plot. Une fois arrimée sur chaque bras 7, la butée déformable 8 repose sur ledit bras 7 par l'intermédiaire de son embase 14.

En se référant à la figure 1, une butée déformable 8 est implantée au niveau de la partie supérieure de chaque bras 7, dans une zone dudit bras 7, qui est susceptible de venir au contact de la partie inférieure d'une gouttière 13 latérale du coffre 3, pour marquer la fin du déplacement de la porte 2, lorsque celle-ci atteint une position de complète ouverture.

En se référant à la figure 3b, lorsque la porte 2 du coffre 3 arrive en bout de course pour atteindre une position de complète ouverture, chaque bras 7 a tendance à se relever dans le sens matérialisé par la flèche 29, pour venir au contact de la partie inférieure de la gouttière 13. La butée 8 positionnée sur le bras 7 se déforme contre ladite gouttière 13, provoquant la pénétration des deux lèvres 19 dans la gorge 22. Les frottements générés lors de cette interaction, s'amplifient au fur et à mesure que les deux lèvres 19 progressent dans ladite gorge 22, en raison d'un resserrement de ladite gorge 22. Les deux lèvres 19 finissent par se bloquer dans la gorge 22 lorsque les frottements deviennent trop importants. La configuration des deux lèvres 19 ainsi que la section profilée de la gorge 22, autorisent une progression unilatérale desdites lèvres 19 dans ladite gorge 22, sans possibilité d'engendrer des rebonds de la porte 2 en fin de course. Ces butées 8 déformables contribuent également à maintenir la porte 2 du coffre 3 dans une position de complète ouverture.

## Revendications

1. Butée (8) déformable pour système de montage d'une porte de coffre sur un véhicule comprenant une excroissance (19) interne et une cavité creuse (22), ladite excroissance (19) étant conçue pour venir s'insérer à l'intérieur de ladite cavité (22) en générant des frottements, lorsque la butée (8) se déforme, **caractérisée en ce que** l'excroissance comprend deux lèvres (19) écartées et **en ce que** la cavité est une gorge (22) de section transversale profilée, l'écartement desdites lèvres (19) étant inférieur aux dimensions de l'ouverture (23) de ladite gorge (22).

2. Butée selon la revendication 1, **caractérisée en ce qu'**elle possède un plot (26) dotée d'une tête élargie (27), et est fixée à un bras (7) au moyen d'une insertion de ladite tête (27) dans ledit bras (7).

3. Butée selon l'une quelconque des revendications 1 ou 2, **caractérisée en ce que** l'excroissance (19) est déformable élastiquement.

4. Butée selon la revendication 1, **caractérisée en ce que** chaque lèvre (19) a une section triangulaire pour faciliter la pénétration de l'excroissance (19) dans la gorge (22).

5. Butée selon l'une quelconque des revendications 1 à 4, **caractérisée en ce que** chaque butée (8) est creuse et possède deux branches latérales (17) conçues pour se fléchir vers l'extérieur de ladite butée (8) dans le cas d'une déformation de celle-ci.

6. Véhicule (4) comprenant une porte (2) de coffre (3) comprenant deux bras (7) articulés, et deux butées déformables (8), une première extrémité (10) de chaque bras (7) étant rigidement fixée à ladite porte (2) et une deuxième extrémité étant montée en rotation à l'intérieur du coffre (3), chaque butée (8) étant placée sur un bras (7) de manière à pouvoir venir s'écraser contre une bordure (13) latérale dudit coffre (3) lorsque la porte (2) atteint une position de complète ouverture, **caractérisé en ce que** chaque butée (8) est conforme à l'une quelconque des revendications 1 à 5.

7. Véhicule selon la revendication 6, **caractérisé en ce que** chaque bras (7) est en forme de col de cygne, et s'étend dans un plan vertical et longitudinal du véhicule (4).

8. Véhicule selon l'une quelconque des revendications 6 ou 7, **caractérisée en ce qu'**un ressort précontraint (9) relie chaque bras (7) à une paroi interne du coffre (3), de façon à favoriser l'ouverture de la porte (2) dudit coffre (3).

## Patentansprüche

1. Verformbarer Anschlag (8) für ein System zur Montage eines Kofferraumdeckels an einem Fahrzeug, aufweisend eine innere Ausstülpung (19) und einen hohlen Zwischenraum (22), wobei die Ausstülpung (19) dafür vorgesehen ist, sich in das Innere des Zwischenraums (22) unter Bildung von Reibungen einzufügen, wenn sich der Anschlag (8) verformt, **dadurch gekennzeichnet, dass** die Ausstülpung zwei beabstandete Lippen (19) aufweist und dass der Zwischenraum eine Rille (22) mit Profilquerschnitt ist, wobei der Abstand der Lippen (19) kleiner als die Abmessungen der Öffnung (23) der Rille (22) ist.

2. Anschlag nach Anspruch 1, **dadurch gekennzeichnet, dass** er einen mit einem erweiterten Kopf (27) versehenen Zapfen (26) besitzt und mit einem Arm (7) mittels des Einsetzens des Kopfes (27) in den Arm (7) befestigt ist.

3. Anschlag nach einem der Ansprüche 1 oder 2, **dadurch gekennzeichnet, dass** die Ausstülpung (19) elastisch verformbar ist.

4. Anschlag nach Anspruch 1, **dadurch gekennzeichnet, dass** jede Lippe (19) einen dreieckigen Querschnitt besitzt, um das Eindringen der Ausstülpung (19) in die Rille (22) zu erleichtern.

5. Anschlag nach einem der Ansprüche 1 bis 4, **dadurch gekennzeichnet, dass** jeder Anschlag (8) hohl ist und zwei seitliche Zweige (17) besitzt, welche dafür ausgelegt sind, um sich in Richtung des äußeren Bereichs des Anschlags (8) im Falle seiner Verformung zu biegen.

6. Fahrzeug (4), aufweisend einen Deckel (2) eines Kofferraums (3), welcher zwei angelenkte Arme (7) aufweist, und zwei verformbare Anschläge (8), wobei ein erstes Ende (10) von jedem Arm (7) starr an dem Deckel (2) befestigt ist und ein zweites Ende im Inneren des Kofferraums (3) drehbar montiert ist, wobei jeder Anschlag (8) an einem Arm (7) derartig angeordnet ist, um gegen einen seitlichen Rand (13) des Kofferraums (3) eingedrückt zu werden, wenn die Klappe (2) eine Position der vollständigen Öffnung erreicht,
**dadurch gekennzeichnet, dass** jeder Anschlag (8) einem der Ansprüche 1 bis 5 entspricht.

7. Fahrzeug nach Anspruch 6, **dadurch gekennzeichnet, dass** jeder Arm (7) schwanenhalsförmig ist und sich in einer vertikalen und longitudinalen Ebene des Fahrzeugs (4) erstreckt.

8. Fahrzeug nach einem der Ansprüche 6 oder 7, **dadurch gekennzeichnet, dass** eine vorgespannte Feder (9) jeden Arm (7) mit einer inneren Wand des Kofferraums (3) verbindet, so dass das Öffnen der Klappe (2) des Kofferraums (3) begünstigt wird.

## Claims

1. Deformable stop (8) for a system for fitting a boot lid to a vehicle comprising an internal protrusion (19) and a hollow cavity (22), said protrusion (19) being designed to fit inside said cavity (22), producing friction, when the stopper (8) deforms, **characterized in that** the protrusion comprises two separate lips (19) and **in that** the cavity is a channel (22) of profiled cross section, the separation between said lips (19) being smaller than the dimensions of the opening (23) of said channel (22).

2. Stop according to Claim 1, **characterized in that** it has a stub (26) provided with a widened head (27), and is attached to an arm (7) by virtue of said head (27) being inserted into said arm (7).

3. Stop according to either one of Claims 1 and 2, **characterized in that** the protrusion (19) is elastically deformable.

4. Stop according to Claim 1, **characterized in that** each lip (19) is of triangular cross section so as to facilitate insertion of the protrusion (19) into the channel (22).

5. Stop according to any one of Claims 1 to 4, **characterized in that** each stop (8) is hollow and has two lateral branches (17) that are designed to flex towards the outside of said stop (8) under deformation of the latter.

6. Vehicle (4) comprising a lid (2) for a boot (3), comprising two articulated arms (7) and two deformable stops (8), a first end (10) of each arm (7) being rigidly secured to said lid (2) and a second end being mounted so as to be able to rotate inside the lid (3), each stop (8) being placed on an arm (7) so as to be able to be crushed against a lateral rim (13) of said boot (3) when the lid (2) reaches a fully open position, **characterized in that** each stop (8) is in accordance with any one of Claims 1 to 5.

7. Vehicle according to Claim 6, **characterized in that** each arm (7) is swan-neck-shaped and extends in a vertical and longitudinal plane of the vehicle (4).

8. Vehicle according to either one of Claims 6 and 7, **characterized in that** a prestressed spring (9) connects each arm (7) to an internal wall of the boot (3) so as to favour opening of the lid (2) of said boot (3).
